# EUROPEAN PATENT SPECIFICATION

(11) **EP 1 848 582 B1**
(45) Date of publication and mention of the grant of the patent: **01.05.2013**
(21) Application number: 05855892.5
(22) Date of filing: 28.12.2005
(51) Int. Cl.: B32B 5/26, B01D 39/16

(54) **FILTRATION MEDIA FOR FILTERING PARTICULATE MATERIAL FROM GAS STREAMS**
FILTRATIONSMEDIEN ZUM HERAUSFILTERN VON TEILCHENFÖRMIGEM MATERIAL AUS GASSTRÖMEN
MATIERE FILTRANTE PERMETTANT DE FITLRER UNE MATIERE PARTICULAIRE DE FLUX GAZEUX

(30) Priority: 28.12.2004 US 639771 P
(43) Date of publication of application: 31.10.2007
(73) Proprietor: E.I. DU PONT DE NEMOURS AND COMPANY, Wilmington, DE 19898 (US)
(72) Inventor: JONES, David, Charles, Midlothian, Virginia 23112 (US); BRYNER, Michael, Allen, Midlothian, Virginia 23113 (US); HOVANEC, Joseph, Brian, Midlothian, Virginia 23113 (US); LIM, Hyun, Sung, Richmond, Virginia 23223 (US); WISEMAN, B., Lynne, Richmond, Virginia 23220 (US)
(74) Representative: Matthews, Derek Peter
(86) International application number: PCT/US2005/047401
(87) International publication number: WO 2006/071980

(56) References cited:
- EP-A- 1 366 791
- WO-A-03/080905
- DE-A1- 10 137 161
- US-A- 4 650 506
- US-A1- 2004 187 454
- US-A1- 2004 226 443
- US-A1- 2004 255 783
- KOSMIDER K ET AL: "Polymeric nanofibres exhibit an enhanced air filtration performance" FILTRATION AND SEPARATION, CROYDON, GB, vol. 39, no. 6, July 2002 (2002-07), pages 20-22, XP004381890 ISSN: 0015-1882

## Description

### BACKGROUND OF THE INVENTION

### Field of the Invention

The present invention relates to air filtration media, for filtering particulate material from gas streams.

### Description of the Related Art

Filter media typically utilized for HVAC air filters that perform at efficiencies less than 99.97% at a 0.3 micron challenge are either glass, cellulose or polymer based. Filters made with media in this performance range are typically referred to as "ASHRAE filters" since the American Society of Heating, Refrigerating and Air-Conditioning Engineers writes standards for the performance of filter media in such applications. Polymer based filter media are typically spunbond or meltblown nonwovens that are often electrostatically enhanced to provide higher filtration efficiency at lower pressure drop when compared to glass or cellulose media manufactured by a wet laid paper-making process.

Electrostatically enhanced air filter media and media manufactured by the wet laid process, more specifically with the use of glass fibers, currently have limitations. Electrostatically treated meltblown filter media, as described in U.S. Patent Nos. 4,874,659 and 4,178,157, perform well initially, but quickly lose filtration efficiency in use due to dust loading as the media begin to capture particles and the electrostatic charge thus becomes insulated. In addition, as the effective capture of particulates is based on the electrical charge, the performance of such filters is greatly influenced by air humidity, causing charge dissipation.

Filtration media utilizing microglass fibers and blends containing microglass fibers typically contain small diameter glass fibers arranged in either a woven or nonwoven structure, having substantial resistance to chemical attack and relatively small porosity. Such glass fiber media are disclosed in the following U.S. Patents: Smith et al., U.S. Pat. No. 2,797,163; Waggoner, U.S. Pat. No. 3,228,825; Raczek, U.S. Pat. No. 3,240,663; Young et al., U.S. Pat. No. 3,249,491 ; Bodendorf et al., U.S. Pat. No. 3,253,978; Adams, U.S. Pat. No. 3,375,155; and Pews et al., U.S. Pat. No. 3,882,135. Microglass fibers and blends containing microglass fibers are typically relatively brittle and can break when pleated, and produce undesirable yield losses. Broken microglass fibers can also be released into the air by filters containing microglass fibers, creating a potential health hazard if the microglass were to be inhaled.

Additional disclosures of filtration media are found in U.S. Published Patent Application No. 2004/0226443 A1, U.S. Pat. No. 4,650,506, U.S. Published Patent Application No. 2004/0187454 A1, U.S. Published Patent Application No. 2005/0255783 A1 and in the article by Kosmider and Scott in Filtration and Separation, vol. 39, no. 6, pages 20-22 (2002).

It would be desirable to provide a means for achieving ASHRAE level air filtration while avoiding the above-listed limitations of known filtration media.

Attention is also directed to WO 2006/053295, published 18 May 2006, which has entered the European regional phase as EP-A-1819414.

### SUMMARY OF THE INVENTION

In a first embodiment, the present invention is directed to a filtration medium comprising at least one nanofiber layer of continuous polymeric fibers having diameters less than 1000 nanometers, each nanofiber layer having a basis weight of at least 2.5 g/m², said at least one nanofiber layer sandwiched between two spunbond nonwoven scrim layers, wherein the medium has a filtration efficiency of at least 20% when challenged with particles having an average diameter of 0.3 µm in air flowing at a face velocity of 5.33 cm/sec, and a Handle-o-meter stiffness of at least 45 g.

A second embodiment of the present invention is directed to a process for filtering particulate matter from an air stream comprising passing an air stream containing particulate matter through a filtration medium comprising at least one nanofiber layer of continuous polymeric fibers having diameters less than 1000 nanometers, each nanofiber layer having a basis weight of at least 2.5 g/m², said at least one nanofiber layer sandwiched between two spunbond nonwoven scrim layers, wherein the medium has a filtration efficiency of at least 20% when challenged with particles having an average diameter of 0.3 µm in air flowing at a face velocity of 5.33 cm/sec, and a Handle-o-meter stiffness of at least 45 g, and filtering up to 99.97% of particles having an average diameter of 0.3 µm in an air stream moving at a face velocity of 5.33 cm/sec.

Another embodiment of the present invention is directed to a process of forming a filtration medium comprising providing at least one spunbond nonwoven scrim layer having a Handle-o-meter stiffness of at least 10 g on a moving collection belt, depositing nanofibers on the scrim layer to form a single nanofiber layer having a basis weight of at least 2.5 g/m² to form a filtration medium having a Handle-o-meter stiffness of at least 45 g and a pressure drop of less than 30 mm H₂O, and adhering at least a second spunbond nonwoven scrim layer onto said nanofiber layer.

### DEFINITIONS

The term "nanofibers" refers to fibers having diameters of less than 1,000 nanometers.

The term "filter media" or "media" refers to a material or collection of materials through which a particulate-carrying fluid passes, with a concomitant and at least temporary deposition of the particulate material in or on the media.

The term "ASHRAE filter" refers to any filter suitable for use in heating, ventilation and air conditioning systems for filtering particles from air.

The term "SN structure" refers to a multilayer nonwoven material containing a spunbond (S) layer and a nanofiber (N) layer.

The term "SNS structure" refers to a multilayer nonwoven material containing a nanofiber layer sandwiched between two spunbond layers.

### BRIEF DESCRIPTION OF THE DRAWINGS

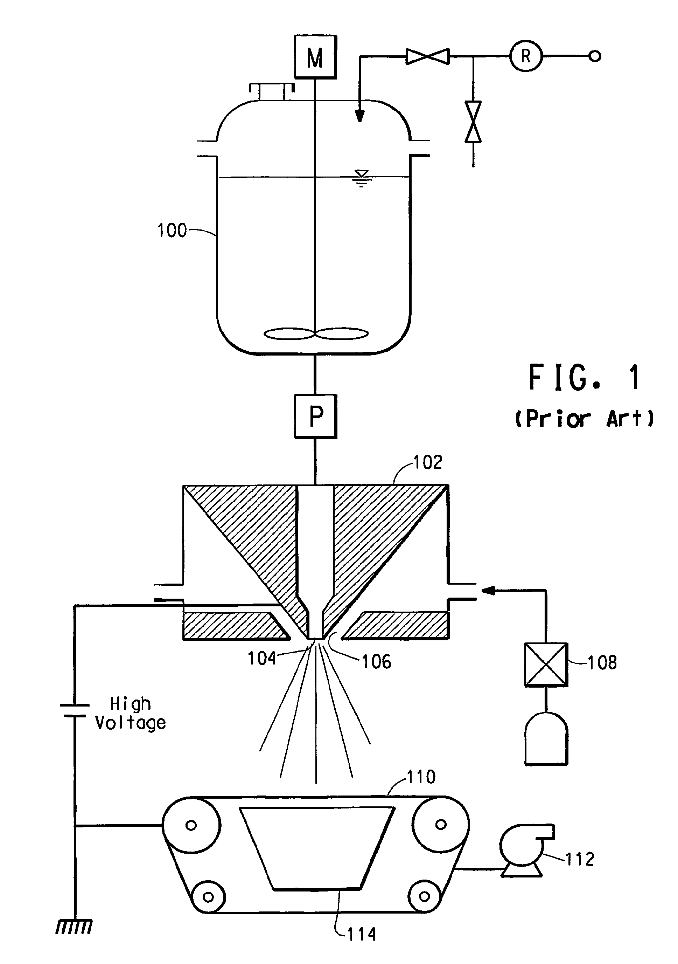

Figure 1 is an illustration of a prior art electroblowing apparatus for forming nanofibers suitable for use in the present invention.

### DETAILED DESCRIPTION OF THE INVENTION

The invention relates to a filter medium comprising at least one nanofiber layer and two scrim layers. The nanofiber layer comprises a collection of substantially continuous organic polymeric ________________ nanofibers in a filtration medium layer, the nanofibers having diameters less than about 1 µm or 1000 nm. Such filter media can be used in filtration applications for removing particulate material from a fluid stream, in particular, particulate material from a gaseous stream such as air.

Filtration media suitable for use in air filtration applications, including ASHRAE filtration and vehicle cabin air filtration, can be made by sandwiching one or more nanofiber layers between two scrim layers to form a SNₓS structure, where x is at least one. Each nanofiber layer has a basis weight of at least 2.5 g/m², and the total basis weight of the nanofiber layers is about 25 g/m². Additionally, the filter medium can contain other layers such as one or more meltblown (M) layers.

In the medium of the invention, the nanofiber layer preferably has a thickness of less than 100 µm; advantageously the thickness of the nanofiber layer is greater than 5 µm and less than 100 µm. The thickness of the nanofiber layer can vary depending on the density of the nanofiber polymer. The thickness of the nanofiber layer can be reduced without substantial reduction in efficiency or other filter properties if the solids volume fraction of the nanofiber layer is increased, such as by calendering or by collecting the nanofiber layer under high vacuum. Increasing the solidity, at constant layer thickness, reduces pore size and increases particulate storage.

The nanofiber layer in the present invention may be made in accordance with the barrier webs disclosed in U.S. Published Patent Application No. 2004/0116028 A1.

The nanofiber layer is made up of substantially continuous polymeric fibers having diameters less than 1000 nm, advantageously between about 100 nm and about 700 nm, or even more advantageously between about 300 nm and about 650 nm. The continuous polymeric fibers of the nanofiber layer can be formed by any process capable of making continuous fibers in this diameter range, including electrostatic spinning or electroblowing. A process for forming nanofibers via electroblowing is disclosed in PCT Patent Publication Number WO 03/080905A (corresponding to U.S. Serial No. 10/477,882, filed November 20, 2002). WO 03/080905A discloses an apparatus and method for producing a nanofiber web, the apparatus essentially as shown in Figure 1. The method comprises feeding a stream of polymeric solution comprising a polymer and a solvent from a storage tank 100 to a series of spinning nozzles 104 within a spinneret 102 to which a high voltage is applied through which the polymeric solution is discharged. Meanwhile, compressed air that is optionally heated in air heater 108 is issued from air nozzles 106 disposed in the sides or the periphery of spinning nozzle 104. The air is directed generally downward as a blowing gas stream which envelopes and forwards the newly issued polymeric solution and aids in the formation of the fibrous web, which is collected on a grounded porous collection belt 110 above a vacuum chamber 114, which has vacuum applied from the inlet of air blower 112.

The filter medium of the invention may be made by adhesively laminating the nanofiber layer to the carrier layer (also referred to herein as a "scrim"), or by forming the nanofiber layer directly on the carrier or scrim layer by placing the scrim layer on the collection belt 110 in the above described process to form an SN structure, in which case the nanofiber layer is adhered to the scrim layer by mechanical entanglement. The medium of the invention can be made by forming a nanofiber layer in a single pass or by building up the nanofiber layer to the desired thickness or basis weight using multiple passes, e.g., in an electroblowing process. The electroblowing process allows a nanofiber layer of suitable basis weight for use in an air filter medium to be formed in a single pass because a higher throughput is possible than previously known in the production of nanofibers. The nanofiber layer may be formed with a collection belt speed of at least 5 m/minute, and advantageously at least 10 m/minute. The polymer solution throughput in the electroblowing process for forming nanofibers is at least about 1 cm³/min/hole of the spinneret, and advantageously at least about 2 cm³/min/hole. Therefore, by configuring the spinneret to have a series of spinning nozzles or holes along the length of the spinneret, and delivering the polymer solution through each nozzle or hole at such high rates of flow, a higher basis weight nanofiber layer than known to date can be formed on a scrim layer in a single pass. Depending on the polymer solution flow rate and the collection belt speed, single nanofiber layers having basis weights of between about 2.5 g/m² and even up to 25 g/m² can be formed in a single pass. In conventional processes for forming nanofiber-containing filtration media, forming a nanofiber layer of suitable basis weight on a scrim requires repeated passes of the scrim through the nanofiber formation process to build up to a basis weight of even 1 g/m². By forming the nanofiber layer in one pass according to the present invention, less handling is required, reducing the opportunity for defects to be introduced in the final fitter medium. The higher polymer solution throughput of the electroblowing process provides a more economical process than previously known in the production of nanofibers. Of course, those skilled in the art will recognize that under certain circumstances it can be advantageous to adjust the spinning conditions to deposit multiple nanofiber layers of at least about 2.5 g/m² in multiple passes in order to build-up the total nanofiber layer basis weight to as much as about 25 g/m². Variations in the spinning conditions to modify the nanofiber laydown rate, and therefore the basis weight of a single nanofiber layer, can be made in the collection belt speed, polymer solution flow rate and even by varying the concentration of the polymer in the solution.

The layers of the filter medium are made from organic polymer materials. The scrim layers require sufficient stiffness to hold pleats and dead folds. The stiffness of a single scrim layer is advantageously at least 10 g, as measured by a Handle-o-meter instrument, described below. The filtration medium of the invention has a total Handle-o-meter stiffness of at least 45 g. Advantageously, the filtration medium has a structure of SNS in which at least two scrim layers contribute to the stiffness.

The medium of the invention can be fabricated into any desired filter format such as cartridges, flat disks, canisters, panels, bags and pouches. Within such structures, the media can be substantially pleated, rolled or otherwise positioned on support structures. The filtration medium of the invention can be used in virtually any conventional structure including flat panel filters, oval filters, cartridge filters, spiral wound filter structures and can be used in pleated, Z-filter, V-bank, or other geometric configurations involving the formation of the medium to useful shapes or profiles. Advantageous geometries include pleated and cylindrical patterns. Such cylindrical patterns are generally preferred because they are relatively straightforward to manufacture, use conventional filter manufacturing techniques, and are relatively easy to service. Pleating of media increases the media surface area within a given volume. Generally, major parameters with respect to such media positioning are: pleat depth; pleat density (typically measured as a number of pleats per inch along the inner diameter of the pleated media cylinder); and cylindrical length or pleat length. In general, a principal factor with respect to selecting filter medium pleat depth, pleat length, and pleat density, especially for barrier arrangements, is the total surface area required for any given application or situation. Such principles would apply, generally, to the medium of the invention and preferably to similar barrier-type arrangements.

The filter medium of the invention can be used for the removal of a variety of particulate matter from fluid streams. The particulate matter can include both organic and inorganic contaminants. Organic contaminants can include particulate natural products, organic compounds, polymer particulate, food residue and other materials. Inorganic residue can include dust, metal particulate, ash, smoke, mist and other materials.

The initial pressure drop (also referred to herein as "pressure drop" or "pressure differential") of the filter medium is advantageously less than about 30 mm H₂O, more advantageously less than about 24 mm H₂O. The pressure drop across a filter increases over time during use, as particulates plug the filter. Assuming other variables to be held constant, the higher the pressure drop across a filter, the shorter the filter life. A filter typically is determined to be in need of replacement when a selected limiting pressure drop across the filter is met. The limiting pressure drop varies depending on the application. Since this buildup of pressure is a result of dust (or particulate) load, for systems of equal efficiency, a longer life is typically directly associated with higher load capacity. Efficiency is the propensity of the medium to trap, rather than to pass, particulates. In general the more efficient filter media are at removing particulates from a gas flow stream, the more rapidly the filter media will approach the "lifetime" pressure differential, assuming other variables to be held constant. The filter medium of the invention has an efficiency of at least about 20%, meaning that the medium is capable of filtering out at least about 20% of particles having a diameter of 0.3 µm in air flowing at a face velocity of 5.33 cm/sec. For use in ASHRAE filters, advantageously, the medium of the invention is capable of filtering out at least about 30% and up to about 99.97% of 0.3 µm particles in air flowing at a face velocity of 5.33 cm/sec.

The higher the air permeability of the filter medium, the lower the pressure drop, therefore the longer the filter life, assuming other variables are held constant. Advantageously, the Frazier air permeability of the filter medium of the invention is at least about 0.91 m³/min/m², and typically up to about 48 m³/min/m²_{.}

The filter medium of the present invention is advantageously substantially electrically neutral and therefore is much less affected by air humidity as compared with the filters disclosed in U.S. Pat. Nos. 4,874,659 and 4,178,157, described above, which owe their performances to the electrical charges associated therewith. By "substantially electrically neutral" is meant that the medium does not carry a detectable electrical charge.

### TEST METHODS

Filtration Efficiency was determined by a Fractional Efficiency Filter Tester Model 3160 commercially available from TSI Incorporated (St. Paul, Minnesota). The desired particle sizes of the challenge aerosol particles were entered into the software of the tester, and the desired filter flow rate was set. A volumetric airflow rate of 32.4 liters/min and a face velocity of 5.33 cm/sec were used. The test continued automatically until the filter was challenged with every selected particle size. A report was then printed containing filter efficiency data for each particle size with pressure drop.

Pressure Drop was reported by the Fractional Efficiency Filter Tester Model 3160 commercially available from TSI Incorporated (St. Paul, Minnesota). The testing conditions are described under the Filtration Efficiency test method. Pressure drop is reported in mm of water column, also referred to herein as mm H₂O.

Basis wight was determined by ASTM D-3776, which is hereby incorporated by reference and reported in g/m².

Thickness was determined by ASTM D177-64, which is hereby incorporated by reference, and is reported in micrometers.

Fiber Diameter was determined as follows. Ten scanning electron microscope (SEM) images at 5,000x magnification were taken of each nanofiber layer sample. The diameter of eleven (11) clearly distinguishable nanofibers were measured from the photographs and recorded. Defects were not included (i.e., lumps of nanofibers, polymer drops, intersections of nanofibers). The average fiber diameter for each sample was calculated.

Stiffness was measured using a "Handle-o-meter" instrument manufactured by Thwing Albert Instrument Co. (Philadelphia, Pennsylvania). The Handle-o-meter measures in grams the resistance that a blade encounters when forcing a specimen of material into a slot of parallel edges. This is an indication of the stiffness of the material, which has an inverse relationship with the flexibility of the material. The stiffness is measured in both the longitudinal direction (machine direction) of the material and the transverse direction (cross-machine direction).

Frazier Permeability is a measure of air permeability of porous materials and is reported in units of ft³/min/ft². It measures the volume of air flow through a material at a differential pressure of 0.5 inches (12.7 mm) water. An orifice is mounted in a vacuum system to restrict flow of air through sample to a measurable amount. The size of the orifice depends on the porosity of the material. Frazier permeability is measured in units of ft³/min/ft² using a Sherman W. Frazier Co. dual manometer with calibrated orifice, and converted to units of m³/min/m².

### EXAMPLES

### Reference Example 1

Nanofiber layers were made by electroblowing a solution of nylon 6,6 polymer having a density of 1.14 g/cc (available from E. I. du Pont de Nemours and Company, Wilmington, Delaware) at 24 weight percent in formic acid at 99% purity (available from Kemira Oyj, Helsinki, Finland). The polymer and solvent were fed into a solution mix tank, the solution transferred into a reservoir and metered through a gear pump to an electroblowing spin pack having spinning nozzles, as described in PCT Patent Publication No. WO 03/080905. The spin pack was 0.75 meter wide and had 76 spinning nozzles. The pack was at room temperature with the pressure of the solution in the spinning nozzles at 10 bar. The spinneret was electrically insulated and applied with a voltage of 75 kV. Compressed air at a temperature of 44°C was injected through air nozzles into the spin pack at a rate of 7.5 m³/minute and a pressure of 660 mm H₂O.The solution exited the spinning nozzles into air at atmospheric pressure, a relative humidity of 65-70% and a temperature of 29°C. The polymer solution throughput of the nanofiber-forming process was about 2 cm³/min/hole. The fibers formed were laid down 310 mm below the exit of the pack onto a porous scrim on top of a porous belt moving at 5-12 m/minute. A vacuum chamber pulling a vacuum of 100-170 mm H₂O beneath the belt assisted in the laydown of the fibers. A 40 g/m² basis weight spunbond nonwoven material obtained from Kolon Industries (S. Korea) was used as the scrim. The scrim had a stiffness of 35 g in the longitudinal direction and 55 g in the transverse direction.

The SN structure produced was challenged at various particle sizes for filtration efficiency using a TSI tester 3160, and the results are given in Table 1. Efficiencies reported in the data below are for 0.3 micrometer particle challenge only.

### Comparative Example 2

An SN structure was made as described in Example 1, but at a higher basis weight of the nanofiber layer. The resulting structure was challenged at various particle sizes for filtration efficiency, and the results are given in Table 1.

**Table 1**

| Ex. No. | Nanofiber diameter (nm)* | Nanofiber basis weight (g/m²) | Efficiency (%) | Pressure Drop (mm H₂O) | Frazier air permeability (m³/m²/min) |
|---|---|---|---|---|---|
| 1 | 341/387 | 3 | 69.9 | 3.7 | 37 |
| 2 | 374/362 | 5 | 85 | 6.4 | 22 |

| | | | | | |
|---|---|---|---|---|---|
| *first measurement/second measurement | | | | | |

### Example 3

A filtration medium having an SNS structure was formed by hand consisting a nanofiber layer having a basis weight of about 3 g/m² sandwiched between two spunbond layers each having a basis weight of about 21 g/m² made from bicomponent sheath-core fibers having a sheath of polyethylene (PE) and a core of poly(ethylene terephthalate) (PET). The average diameter of the nanofibers was about 651 nm. The nanofibers were nylon. The Frazier air permeability, the pressure drop and the efficiency of the filtration medium are listed in Table 2.

### Examples 4-10

Filtration media were formed as in Example 3, with the exception that the media of Examples 4-10 had various numbers of nanofiber (N) layers and meltblown (M) layers sandwiched between the two spunbond (S) layers. The meltblown layers were made from side-by-side PET-PE bicomponent fibers, each meltblown layer having a basis weight of about 17 g/m². The structure of each medium, basis weight of the nanofiber layer, basis weight of the filtration medium, Frazier air permeability, pressure drop and efficiency of the filtration medium are listed in Table 2.

### Comparative Examples 11-15

Filtration media were formed by electroblowing layers of nylon 6 nanofibers onto a spunbond nonwoven support. The average diameter of the nanofibers was between about 300 and 400 nm. The number of passes to form the nanofiber layer, the nanofiber layer basis weight, the media Frazier air permeability, pressure drop and filtration efficiency are listed in Table 2.

### Examples 16-17

Filtration media were formed by electroblowing layers of nylon 6,6 nanofibers onto a scrim. The media of Examples 16-17 had SN structures including multiple passes of the scrim layer through the electroblowing process. The scrim was a bilayer structure containing a layer of carded nylon and a layer of carded polyester which was subsequently thermally bonded, obtained from HDK Industries, Inc., having a basis weight of about 62 g/m². The average diameter of the nanofibers was between about 300 and 400 nm. The number of passes to form the nanofiber layer, the nanofiber layer basis weight, and the filtration media basis weight, Frazier air permeability, pressure drop and filtration efficiency are listed in Table 2.

### Comparative Example 18

A filtration medium was formed by electroblowing a single layer of nylon 6,6 nanofibers onto a moving collection belt in an electroblowing process at low vacuum pinning pressure, resulting in a lofty nanofiber layer. The medium had a nanofiber layer with a basis weight of about 20 g/m², formed in a single pass through the electroblowing process. The average diameter of the nanofibers was between about 300 and 400 nm. The Frazier air permeability, pressure drop and filtration efficiency of the filtration medium are listed in Table 2.

**Table 2**

| Ex. No. | Medium Structure | Nanofiber basis weight (g/m²) | Medium basis weight (g/m²) | Frazier air permeability (m³/m²/min) | Pressure Drop (mm H₂O) | Efficiency (%) |
|---|---|---|---|---|---|---|
| 3 | SNS | 3.05 | 45.7 | 10.8 | 3.94 | 62.76 |
| 4 | SMNNS | 6.1 | 65.7 | 4.58 | 8.17 | 89.07 |
| 5 | SMNNNS | 9.2 | 68.8 | 3.41 | 11.1 | 94.03 |
| 6 | SMNNNNS | 12.2 | 71.8 | 2.87 | 14.9 | 97.53 |
| 7 | SMMNNS | 6.1 | 82.7 | 3.57 | 11.6 | 92.48 |
| 8 | SMMNNNS | 9.2 | 85.7 | 2.86 | 15.0 | 97.22 |
| 9 | SMMNNNNS | 12.2 | 88.8 | 2.51 | 17.7 | 98.14 |
| 10 | SMMNNNNS-SMMNNNNS | 24.4 | 178 | 1.21 | 35.7 | 99.93 |
| 11 | SN (1 pass) | 5 | | 14.6 | 3.30 | 64.50 |
| 12 | SNN (2 pass) | 10 | | 7.31 | 6.82 | 87.14 |
| 13 | SNNN (3 pass) | 15 | | 4.57 | 10.2 | 91.94 |
| 14 | SNNNN (4 pass) | 20 | | 3.35 | 14.0 | 96.00 |
| 15 | SNNNNN (5 pass) | 25 | | 3.35 | 16.2 | 96.99 |
| 16 | SNNNN | 17.0 | 79.4 | 2.74 | 16.2 | 99.13 |
| 17 | SN | 3.63 | 66.0 | 4.57 | 10.6 | 95.50 |
| 18 | N (1 pass) | 20 | n/a | 3.57 | 10.2 | 96.40 |

### Comparative ExamPles 19-26

Filtration media having an SNS structure were formed by hand of nylon nanofiber layers having between about 0.3 and 0.5 g/m² basis weight sandwiched between two scrim layers, each scrim layer having a basis weight of about 17 g/m². In Comparative Examples 19-20, the scrim layers were spunbond PET on both sides. In Comparative Examples 21-22, the scrim layer was a spunbond PET on one side, and a spunbond nylon (obtained from Cerex Advanced Fabrics) on the other. In Comparative Examples 23-24, the scrim layer was a spunbond PET on one side, and a bilayer structure containing a layer of carded nylon and a layer of carded polyester which was subsequently thermally bonded (obtained from HDK Industries, Inc.) on the other. In Comparative Examples 25-26, the scrim layers were bilayer structures containing a layer of carded nylon and a layer of carded polyester which was subsequently thermally bonded (obtained from HDK Industries, Inc.) on both sides. The nanofiber layer basis weight, average diameter of the nanofibers, the media Frazier air permeability, pressure drop and filtration efficiency are listed in Table 3.

**Table 3**

| Comp. Ex. No. | Nanofiber basis weight (g/m²) | Nanofiber diameter (nm) | Medium Basis Weight (g/m²) | Frazier air permeability (m³/m²/min) | Pressure Drop (mm H₂O) | Efficiency (%) |
|---|---|---|---|---|---|---|
| 19 | 0.3 | 917 | 17.66 | 199 | 1.58 | 15.05 |
| 20 | 0.5 | | 20.16 | 90.8 | 2.30 | 28.35 |
| 21 | 0.3 | 947 | 16.5 | 173 | 1.58 | 14.20 |
| 22 | 0.5 | 956 | 16.5 | 77.1 | 2.70 | 23.28 |
| 23 | 0.3 | 852 | 19.5 | 178 | 1.57 | 8.61 |
| 24 | 0.5 | 930 | 19.0 | 86.2 | 2.33 | 18.41 |
| 25 | 0.4 | 1275 | 36.0 | 109 | 1.38 | 10.63 |
| 26 | 0.3 | | | 206 | 1.25 | 8.60 |

## Claims

1. A filtration medium comprising at least one nanofiber layer of continuous polymeric fibers having diameters less than 1000 nanometers, each nanofiber layer having a basis weight of at least 2.5 g/m², said at least one nanofiber layer sandwiched between two spunbond nonwoven scrim layers, wherein the medium has a filtration efficiency of at least 20% when challenged with particles having an average diameter of 0.3 µm in air flowing at a face velocity of 5.33 cm/sec, and a Handle-o-meter stiffness of at least 45 g.

2. The filtration medium of claim 1, wherein the total nanofiber layer basis weight is 25 g/m².

3. The filtration medium of claim 1 further comprising one or more meltblown layers.

4. The filtration medium of claim 1, wherein the nanofiber layer has a thickness of less than 100 µm.

5. The filtration medium of claim 1, wherein the continuous polymeric fibers of the nanofiber layer have diameters between 100 nanometers and 700 nanometers.

6. The filtration medium of claim 1, wherein the continuous polymeric fibers of the nanofiber layer have diameters between 300 nanometers and 650 nanometers.

7. The filtration medium of claim 1, wherein the medium has a filtration efficiency of at least 30% and up to 99.97% when challenged with particles having an average diameter of 0.3 µm in air flowing at a face velocity of 5.33 cm/sec.

8. The filtration medium of claim 1, wherein the medium Is substantially electrically neutral.

9. The filtration medium of claim 1, which has an initial pressure drop less than 30 mm H₂O.

10. The filtration medium of claim 1, which has an initial pressure drop less than 24 mm H₂O.

11. The filtration medium of claim 1, which has a Frazier air permeability of at least 0.91 m³/min/m².

12. The filtration medium of claim 1, which has a Frazier air permeability of between 0.91 m³/min/m² and 48 m³/min/m².

13. The filtration medium of claim 1, wherein the filtration medium is pleated.

14. A process for filtering particulate matter from an air stream comprising passing an air stream containing particulate matter through a filtration medium comprising at least one nanofiber layer of continuous polymeric fibers having diameters less than 1000 nanometers, each nanofiber layer having a basis weight of at least 2.5 g/m², said at least one nanofiber layer sandwiched between two spunbond nonwoven scrim layers, wherein the medium has a filtration efficiency of at least 20% when challenged with particles having an average diameter of 0.3 µm in air flowing at a face velocity of 5.33 cm/sec, and a Handle-o-meter stiffness of at least 45 g, and filtering up to 99.97% of particles having an average diameter of 0.3 µm in an air stream moving at a face velocity of 5.33 cm/sec.

15. The process of claim 14, wherein at least 20% of particles 0.3 µm and larger are filtered.

16. The process of claim 14, wherein the initial pressure drop of the filtration medium is less than 30 mm H₂O.

17. The process of claim 14, wherein the total basis weight of the nanofiber layer is about 25 g/m².

18. A process of forming a filtration medium comprising providing at least one spunbond nonwoven scrim layer having a Handle-o-meter stiffness of at least 10 g on a moving collection belt, depositing nanofibers on the scrim layer to form a single nanofiber layer having a basis weight of at least 2.5 g/m² to form a filtration medium having a Handle-o-meter stiffness of at least 45 g and a pressure drop of less than 30 mm H₂O, and adhering at least a second spunbond nonwoven scrim layer onto said nanofiber layer.

19. The process of claim 18, wherein the total nanofiber layer basis weight is 25 g/m².

20. The process of claim 19, wherein the nanofiber layer is formed in a single pass of the scrim layer on the moving collection belt.

21. The process of claim 18, wherein the nanofibers are formed by electroblowing a polymer solution from a series of spinneret holes at a rate of at least 1 cm³/min/hole and the collection belt moves at a rate of at least 5 m/minute.

22. The process of claim 20, wherein the polymer solution is electroblown from a series of spinneret holes at a rate of at least 2 cm³/min/hole.

23. The process of claim 18, further comprising pleating the filtration medium.

24. The process of claim 18, wherein said first scrim layer has a Handle-o-meter stiffness of at least 45 g.

25. The process of claim 18, wherein said scrim layers have a combined Handle-o-meter stiffness of at least 45 g.

## Patentansprüche

1. Filtrationsmedium umfassend mindestens eine Nanofaserschicht aus kontinuierlichen polymeren Fasern, die Durchmesser von weniger als 1000 Nanometern aufweisen, wobei jede Nanofaserschicht ein Flächengewicht von mindestens 2,5 g/m² aufweist, wobei die mindestens eine Nanofaser zwischen zwei spinnbondierten Vliesgitterstoffschichten eingeschoben ist, wobei das Medium eine Filtriereffizienz von mindestens 20 %, wenn es mit Teilchen, die einen durchschnittlichen Durchmesser von 0,3 µm aufweisen, in einer Luftströmung mit einer Lufteinströmgeschwindigkeit von 5,33 cm/sec provoziert wird, und eine Handle-o-Meter-Steifigkeit von mindestens 45 g aufweist.

2. Filtrationsmedium nach Anspruch 1, wobei das Flächengewicht der Nanofaserschicht insgesamt 25 g/m² beträgt.

3. Filtrationsmedium nach Anspruch 1, des Weiteren eine oder mehrere schmelzgeblasene Schichten umfassend.

4. Filtrationsmedium nach Anspruch 1, wobei die Nanofaserschicht eine Dicke von weniger als 100 µm aufweist.

5. Filtrationsmedium nach Anspruch 1, wobei die kontinuierlichen polymeren Fasern der Nanofaserschicht Durchmesser zwischen 100 Nanometern und 700 Nanometern aufweisen.

6. Filtrationsmedium nach Anspruch 1, wobei die kontinuierlichen polymeren Fasern der Nanofaserschicht Durchmesser zwischen 300 Nanometern und 650 Nanometern aufweisen.

7. Filtrationsmedium nach Anspruch 1, wobei das Medium eine Filtriereffizienz von mindestens 30 % und bis zu 99,97 % aufweist, wenn es mit Teilchen, die einen durchschnittlichen Durchmesser von 0,3 µm aufweisen, in einer Luftströmung mit einer Lufteinströmgeschwindigkeit von 5,33 cm/sec provoziert wird.

8. Filtrationsmedium nach Anspruch 1, wobei das Medium im Wesentlichen elektrisch neutral ist.

9. Filtrationsmedium nach Anspruch 1, das einen anfänglichen Druckverlust von weniger als 30 mm H₂O aufweist.

10. Filtrationsmedium nach Anspruch 1, das einen anfänglichen Druckverlust von weniger als 24 mm H₂O aufweist.

11. Filtrationsmedium nach Anspruch 1, das eine Frazier-Luftdurchlässigkeit von mindestens 0,91 m³/min/m² aufweist.

12. Filtrationsmedium nach Anspruch 1, das eine Frazier-Luftdurchlässigkeit zwischen 0,91 m³/min/m² und 48 m³/min/m² aufweist.

13. Filtrationsmedium nach Anspruch 1, wobei das Filtrationsmedium plissiert ist.

14. Verfahren zum Filtrieren teilchenförmiger Substanz aus einem Luftstrom, umfassend das Hindurchführen eines teilchenförmige Substanz enthaltenden Luftstroms durch eine Filtrationsmedium, das mindestens eine Nanofaserschicht aus kontinuierlichen polymeren Fasern umfasst, die Durchmesser von weniger als 1000 Nanometern aufweisen, wobei jede Nanofaserschicht ein Flächengewicht von mindestens 2,5 g/m² aufweist, wobei die mindestens eine Nanofaserschicht zwischen zwei spinnbondierten Vliesgitterstoffschichten eingeschoben ist, wobei das Medium eine Filtriereffizienz von mindestens 20 %, wenn es mit Teilchen, die einen durchschnittlichen Durchmesser von 0,3 µm aufweisen, in einer Luftströmung mit einer Lufteinströmgeschwindigkeit von 5,33 cm/sec provoziert wird, und eine Handle-o-Meter-Steifigkeit von mindestens 45 g aufweist, und das Filtrieren von bis zu 99,97 % der Teilchen, die einen durchschnittlichen Durchmesser von 0,3 µm aufweisen, in einer Luftströmung, die sich mit einer Lufteinströmgeschwindigkeit von 5,33 cm/sec bewegt.

15. Verfahren nach Anspruch 14, wobei mindestens 20 % der Teilchen von 0,3 µm und größer filtriert werden.

16. Verfahren nach Anspruch 14, wobei der anfängliche Druckverlust des Filtrationsmediums weniger als 30 mm H₂O beträgt.

17. Verfahren nach Anspruch 14, wobei das Flächengewicht der Nanofaserschicht insgesamt etwa 25 g/m² beträgt.

18. Verfahren zum Bilden eines Filtrationsmediums, umfassend das Bereitstellen von mindestens einer spinnbondierten Vliesgitterstoffschicht, die eine Handle-o-Meter-Steifigkeit von mindestens 10 g aufweist, auf einem sich bewegenden Auffangband, das Absetzen von Nanofasern auf der Gitterstoffschicht unter Bildung einer einzelnen Nanofaserschicht, die ein Flächengewicht von mindestens 2,5 g/m² aufweist, unter Bildung eines Filtrationsmediums, das eine Handle-o-Meter-Steifigkeit von mindestens 45 g und einen Druckverlust von weniger als 30 mm H₂O aufweist, und das Befestigen mindestens einer zweiten spinnbondierten Vliesgitterstoffschicht auf der Nanofaserschicht.

19. Verfahren nach Anspruch 18, wobei das Flächengewicht der Nanofaserschicht insgesamt 25 g/m² beträgt.

20. Verfahren nach Anspruch 19, wobei die Nanofaserschicht in einem einzigen Durchgang der Gitterstoffschicht auf dem sich bewegenden Auffangband gebildet wird.

21. Verfahren nach Anspruch 18, wobei die Nanofasern durch Elektroblasen einer Polymerlösung aus einer Reihe von Spinndüsenöffnungen mit einer Rate von mindestens 1 cm³/min/Öffnung gebildet werden und das Auffangband sich mit einer Rate von mindestens 5 m/Minute bewegt.

22. Verfahren nach Anspruch 20, wobei die Polymerlösung aus einer Reihe von Spinndüsenöffnungen mit einer Rate von mindestens 2 cm³/min/Öffnung elektrogeblasen wird.

23. Verfahren nach Anspruch 18, des Weiteren das Plissieren des Filtrationsmediums umfassend.

24. Verfahren nach Anspruch 18, wobei die erste Gitterstoffschicht eine Handle-o-Meter-Steifigkeit von mindestens 45 g aufweist.

25. Verfahren nach Anspruch 18, wobei die Gitterstoffschichten eine kombinierte Handle-o-Meter-Steifigkeit von mindestens 45 g aufweisen.

## Revendications

1. Milieu de filtration comprenant au moins une couche de nanofibres de fibres polymères continues ayant des diamètres inférieurs à 1 000 nanomètres, chaque couche de nanofibres ayant un poids de base d'au moins 2,5 g/m², ladite au moins une couche de nanofibres étant prise en sandwich entre deux couches de canevas non tissées filées liées, dans lequel le milieu a une efficacité de filtration d'au moins 20 % lorsque confronté à des particules ayant un diamètre moyen de 0,3 µm dans un écoulement d'air à une vitesse frontale de 5,33 cm/sec, et une rigidité mesurée à l'aide d'un appareil de mesure du drapé d'au moins 45 g.

2. Milieu de filtration selon la revendication 1, dans lequel le poids de base total de la couche de nanofibres est de 25 g/m².

3. Milieu de filtration selon la revendication 1, comprenant en outre une ou plusieurs couche(s) de fusion soufflage.

4. Milieu de filtration selon la revendication 1, dans lequel la couche de nanofibres a une épaisseur inférieure à 100 µm.

5. Milieu de filtration selon la revendication 1, dans lequel les fibres polymères continues de la couche de nanofibres ont des diamètres compris entre 100 nanomètres et 700 nanomètres.

6. Milieu de filtration selon la revendication 1, dans lequel les fibres polymères continues de la couche de nanofibres ont des diamètres compris entre 300 nanomètres et 650 nanomètres.

7. Milieu de filtration selon la revendication 1, dans lequel la milieu a une efficacité de filtration d'au moins 30 % et jusqu'à 99,97 % lorsque confronté à des particules ayant un diamètre moyen de 0,3 µm dans un écoulement d'air à une vitesse frontale de 5,33 cm/sec.

8. Milieu de filtration selon la revendication 1, dans lequel le milieu est substantiellement électriquement neutre.

9. Milieu de filtration selon la revendication 1, qui a une chute de pression initiale inférieure à 30 mm de H₂O.

10. Milieu de filtration selon la revendication 1, qui a une chute de pression initiale inférieure à 24 mm de H₂O.

11. Milieu de filtration selon la revendication 1, qui a une perméabilité à l'air de Frazier d'au moins 0,91 m³/min/m².

12. Milieu de filtration selon la revendication 1, qui a une perméabilité à l'air de Frazier comprise entre 0,91 m³/min/m² et 48 m³/min/m².

13. Milieu de filtration selon la revendication 1, dans lequel le milieu de filtration est plissé.

14. Procédé de filtration de matière sous forme de particules à partir d'un écoulement d'air comprenant le fait de faire passer un écoulement d'air contenant la matière sous forme de particules à travers un milieu de filtration comprenant au moins une couche de nanofibres de fibres polymères continues ayant des diamètres inférieurs à 1 000 nanomètres, chaque couche de nanofibres ayant un poids de base d'au moins 2,5 g/m², ladite au moins une couche de nanofibres étant prise en sandwich entre deux couches de canevas non tissées filées liées, dans lequel le milieu a une efficacité de filtration d'au moins 20 % lorsque confronté à des particules ayant un diamètre moyen de 0,3 µm dans un écoulement d'air à une vitesse frontale de 5,33 cm/sec, et une rigidité mesurée à l'aide d'un appareil de mesure du drapé d'au moins 45 g, et filtrant jusqu'à 99,97 % des particules ayant un diamètre moyen de 0,3 µm dans un écoulement d'air se déplaçant à une vitesse frontale de 5,33 cm/sec.

15. Procédé selon la revendication 14, dans lequel au moins 20 % des particules de 0,3 µm et plus sont filtrées.

16. Procédé selon la revendication 14, dans lequel la chute de pression initiale du milieu de filtration est inférieure à 30 mm de H₂O.

17. Procédé selon la revendication 14, dans lequel le poids de base total de la couche de nanofibres est d'environ 25 g/m².

18. Procédé de formation d'un milieu de filtration comprenant la fourniture d'au moins une couche de canevas non tissée filée liée ayant une rigidité mesurée à l'aide d'un appareil de mesure du drapé d'au moins 10 g sur une courroie de collecte en mouvement, déposant les nanofibres sur la couche de canevas pour former une couche de nanofibres unique ayant un poids de base d'au moins 2,5 g/m² pour former un milieu de filtration ayant une rigidité mesurée à l'aide d'un appareil de mesure du drapé d'au moins 45 g et une chute de pression inférieure à 30 mm de H₂O, et faisant adhérer au moins une seconde couche de canevas non tissée filée liée sur ladite couche de nanofibres.

19. Procédé selon la revendication 18, dans lequel le poids de base total de la couche de nanofibres est de 25 g/m².

20. Procédé selon la revendication 19, dans lequel la couche de nanofibres est formée en un passage unique de la couche de canevas sur la courroie de collecte en mouvement.

21. Procédé selon la revendication 18, dans lequel les nanofibres sont formées par électrosoufflage d'une solution polymère à partir d'une série de trous de filière à une vitesse d'au moins 1 cm³/min/trou et la courroie de collecte se déplace à une vitesse d'au moins 5 m/minute.

22. Procédé selon la revendication 20, dans lequel la solution polymère est électrosoufflée à partir d'une série de trous de filière à une vitesse d'au moins 2 cm³/min/trou.

23. Procédé selon la revendication 18, comprenant en outre le plissage du milieu de filtration.

24. Procédé selon la revendication 18, dans lequel ladite première couche de canevas a une rigidité mesurée à l'aide d'un appareil de mesure du drapé d'au moins 45 g.

25. Procédé selon la revendication 18, dans lequel lesdites couches de canevas ont une rigidité combinée mesurée à l'aide d'un appareil de mesure du drapé d'au moins 45 g.
